# EUROPEAN PATENT SPECIFICATION

(11) **EP 1 882 410 B1**
(45) Date of publication and mention of the grant of the patent: **08.06.2011**
(21) Application number: 07112714.6
(22) Date of filing: 18.07.2007
(51) Int. Cl.: A01J 5/04

(54) **Device for connecting a mobile milking unit to the milk main, the vacuum pipe and the electric power**
Vorrichtung zur Verbindung einer mobilen Melkeinheit mit der Milchhauptleitung, dem Vakuumrohr und der Stromversorgung
Dispositif de connexion d'une unité de traite mobile sur le conduit de lait, le tuyau à vide et l'alimentation électrique

(30) Priority: 27.07.2006 IT MI20061483
(43) Date of publication of application: 30.01.2008
(73) Proprietor: INTERPULS S.P.A., 42020 Albinea RE (IT)
(72) Inventor: Sicuri, Roberto, 43100, Parma (IT); Nicolini, Gabriele, 42042, Fabbrico (RE) (IT)
(74) Representative: Ripamonti, Enrico

(56) References cited:
- EP-A- 0 097 395
- EP-A- 1 281 316
- WO-A-95/32614
- DE-A1- 2 637 117
- US-A- 3 820 506

## Description

The present invention relates to a device for connecting a mobile milking unit simultaneously to the milk pipeline (milk main) and to a milking system vacuum pipe and, if required, for making an electrical connection.

As known to the expert of the art, in milk production farms various types of milking methods are used, chosen according to the type of farm, the structure available and the number of cattle to be milked. In those small farms in which the animal genetics are of medium evolution, a type of milking system known as "milk transport type" is widely used,. Systems of this type fall half way between traditional "pail" milking systems and the most evolved "milking hall" systems. In "pail" and in "milk transport" milking, the animals are stably fixed in their stations and the operator responsible for their milking moves from one animal to another, whereas in the case of "milking hall" systems the animals themselves move to reach the milking room in which the operators are located.

"Pail" milking involves operator mobility, as the milked milk is collected in a pail which has to be then emptied by pouring its contents into a suitable larger refrigerated vessel, or into specific drums.

In the case of "milk transport" the operator does not have to move to empty the pail (which is no longer present), as the milked milk is made to flow through suitable pipes directly into a collection tank. However such a system still requires operator mobility, as the operator has to personally transport the mobile milking unit (without however the collection pail), while moving from one animal to another.

For the milking operation it is always essential to have available a suction source (or as said in the jargon of the sector, the "vacuum"), besides possessing the requirements for making the milked milk flow into the milk main. For this purpose, "milk transport" systems are provided with fixed points, known as "taps", at which the connection is made to the mobile milking unit, to the system vacuum pipe, and to the milk main.

Each of said taps forms the fixed part of a relative connection device also comprising a movable part, or connecter piece, connected to the mobile milking unit.

Normally said taps are clamped in conventional manner directly onto the milk main, at a suitable distance apart to serve 4-5 animals. From each tap a rubber tube independently extends to be connected to the vacuum pipe which is arranged parallel and adjacent to the milk main. Consequently said movable part enables the manifold of the mobile milking unit to be connected to the milk main, and the interspace surrounding the sheathes of the milking tubes to be connected to the system vacuum pipe.

As stated, the operator has to move from one tap to another while carrying the mobile milking unit to which said connector piece is connected. Having inserted the connector piece into a tap, all the reachable animals can then be milked, to then disconnect the connector piece from the tap used and insert it into the next tap, and so on, until all animals have been milked. By virtue of the vacuum, the milked milk is conveyed each time directly into the milk main, to then flow into the system collection tank.

The operator is hence saved the serious burden of emptying the pail (an advantage greater the larger the farm), with a saving of time and the advantage of practicality.

In a known double application device (i.e. provided with connections both for the milk and for the vacuum), the fixed part or tap presents a first seat in which a first aperture is provided to communicate with the milk main via a nipple insertable into an aperture previously provided in the milk main. In the first seat a slide element is provided movable between two end positions, in one of which the slide element sealedly closes the first aperture, while in the other position this aperture remains open. The slide element is controlled by the insertion and extraction into and from the first seat of a first hollow male element communicating with the milking unit manifold, clarified below.

The fixed part also presents a second seat communicating with the system vacuum pipe via a non-return valve and a flexible conduit. The near end of the flexible pipe is connected to a nipple in one piece with the body of the fixed part.

As stated, the movable part presents the aforesaid first hollow male element, insertable into said first seat and having in the vicinity of its free end a second aperture which sealedly coincides with said first aperture, to communicate with the milk main when the first male element is completely inserted into the first seat.

Means are provided for dragging the slide element end from its end position in which it does not close the first aperture to the position in which it closes the first aperture when the first male element is extracted from the first seat, and means which enable the slide element to be uncoupled so that it continues to close the first aperture when the first male element is completely extracted from the first seat.

The movable part comprises also a second hollow male element, sealedly insertable into said second seat of the fixed part, as a result of the insertion of the first male element into the first seat. Insertion of the second male element into the second seat causes said non-return valve to open.

Connection devices of so-called triple application type already exist, having a structure slightly different from that of the aforedescribed double application device, and which differ in particular in that an electronic pulsator can be mounted on this movable part (connection devices of this type which allow application of a pneumatic pulsator to the movable part are not currently available). Consequently, this latter comprises a connector for the electronic pulsator and means for connecting it to the interior of the second male element via said connector, and in addition such devices are also provided with two or three pole electrical connection means for powering the electronic pulsator. These latter means consist of a two-pole or three-pole socket provided on the fixed part and a corresponding two-pole or three-pole plug provided on the movable part. Said socket and plug are provided in corresponding positions such that, when the movable part is inserted into the fixed part of the connection device, the plug is simultaneously inserted into the socket, to hence form the electrical connection with the pulsator.

From WO-A-9532614 a connection device is known in which a movable part provides connections for the milk line and for the vacuum line. A separate pulsator is provided in a control unit.

DE 2637117 discloses a movable part including a pneumatic pulsator and providing connections for the milk line and the vacuum line.

An object of the present invention is to provide a connection device of universal type, the movable part of which is arranged to receive a pneumatic pulsator or an electronic pulsator, and is also usable if a pulsator is not required on the movable part (because the pulsator is provided downstream on an auxiliary structure).

As known to the experts of the art, all known connection devices of the aforedescribed type are exclusively applicable to a milk main of 38 mm diameter, so that if a "milk transport" milking system is to be installed, a milk main of this diameter must be used. Said experts know however that it could be useful to utilize in "milk transport" milking systems milk mains of diameter different from 38 mm, in particular of 51 or 63 mm.

Another object of the present invention is therefore to provide a connection device of the aforesaid type, the fixed part of which is applicable to milk mains of different diameters.

To apply the fixed part of known connection devices to the milk main, the body of the fixed part presents a re-entrant arch intended to embrace a part of the perimeter of the milk main cross-section. A backing element, fixable to the body of the fixed part by screws, and presenting an arch similar to the preceding, enables the opposing perimetral part of the milk main to be embraced to enable the fixed part to be clamped to this latter by screws. However the arches of the commercial devices have a radius of curvature which enables the fixed part to be clamped only to a 38 mm milk main, as stated.

It has been found that no matter how tightly said screws are screwed down to clamp the fixed part to the milk main as firmly as possible, because of the fact that the connection device and in particular its fixed part can be subjected to tugging or impacts, it can happen that this latter is subjected to forces which tend to rotate it about the milk main axis, with breakage of said nipple present on the fixed part and through which the milk is fed into the milk main. To prevent this happening, the solution has already been used of applying mastic or glue between the milk main and said arches, this solution however being to the disadvantage of installation practicality.

Another object of the invention is therefore to provide a connection device which not only ensures against breakage of said nipple, but also enables the fixed part to be easily mounted on the milk main.

In known connection devices a flexible pipe enables the milk collected in the milking unit to be fed therethrough as far as the free end of a piece of stainless steel pipe, a large part of which is contained within the body of the movable part. The other end of this pipe piece is connected rigidly to a plastic conduit piece contained within the body of the movable part and which also forms the interior of said first male element.

It has been found that at the interface between the stainless steel pipe piece and the consecutive plastic conduit piece, a fissure or crack can easily form because of the pulling force acting on the movable part, with consequences easily imagined by experts of the art.

A further object of the invention is therefore to provide a connection device which does not present this drawback.

A further drawback of known connection devices is due to the fact that the aforesaid second seat provided in the fixed part communicates via a nipple with the flexible pipe which connects the second seat to the system vacuum pipe. This nipple is provided in one piece with the body of the fixed part. Although this seat and the relative non-return valve are washable by the flow through them of the wash liquid normally used to clean the milking system, they are not however inspectionable or accessible for direct cleaning, as would be desirable seeing that dirt could deposit within them which besides creating hygiene problems, could give rise to vacuum losses.

A further object therefore consists of providing a connection device in which the second seat and the relative non-return valve can be inspected for their direct cleaning.

Another object is to enable the connection device to also transmit data or information via cable (for example the milk quantity milked for each animal) to enable more exact hadling of the milking operations.

The initially stated object is attained by the connection device of the present invention, characterised in that the movable part is provided with a connector which enables either a pneumatic pulsator or an electronic pulsator to be applied to the same movable part, possibly via an adaptor, and the pulsator to communicate with the second male element, means being provided, applicable to said connector, to close communication with the second male element if pulsators directly applied to the movable part are not provided.

It should also be noted that the device of which the essential characteristics have just been described also attains the last stated object if a 4 pole (with earth) electrical connection is provided, the fourth pole being dedicated to cable transmission of data enabling more exact control of the milking operations.

To also attain the second aforestated object, a first element having an arch of radius of curvature substantially equal to that of the milk main to be used can be removably applied to the body of the fixed part, to embrace a part of the perimeter of the cross section of the milk main, a second element having an arch of the same radius of curvature as the first element being removably applicable to a backing element forming part of the fixed part to enable the opposing part of the milk main perimeter to be embraced, the backing element being connectable to the body of the fixed part to clamp this latter to the milk main.

In this manner, the body of the fixed part of the connection device becomes applicable to all milk mains of any diameter, if arch elements are provided in which the arch has a suitable radius of curvature. As in the case of known connection devices, the backing element is connected to the body of the fixed part, for its clamping to the milk main, preferably by screws.

To also attain the third aforesaid object, said backing element presents at least one radial (to the relative arch), threaded through hole into which a screw can be screwed, the point of which is forced against the outer surface of the milk main when the screw is screwed completely down, to hence oppose rotation of the fixed part about the milk main axis due to the forces which may act on the fixed part.

This validly contributes to preventing breakage of the aforesaid nipple provided on the fixed part, and which is inserted into the milk main.

The fourth aforestated object is attained by the connection device of the present invention, in which a connection sleeve of suitable elastically flexible material is interposed between the stainless steel pipe piece and the consecutive piece of rigid plastic pipe (forming the interior of the first male element), both enclosed within the body of the movable part. In this respect, it has been found that the presence of this sleeve prevents breakages or discontinuities forming between said pipe pieces.

The fifth aforestated object is also attained by the connection device of the present invention, in which said nipple for connection to the system vacuum pipe via the flexible pipe is formed as a separate piece and has its near end externally threaded to be able to be screwed into a female thread provided in the side wall of a corresponding threaded cylindrical housing provided in the body of the fixed part and communicating directly with said second seat, the diameter of the housing being of a size which enables the second seat and the non-return valve to be inspected and directly cleaned.

For this, it suffices to unscrew said nipple from the body of the fixed part, to be able to directly clean the second seat and valve easily and rapidly.

The invention will be more apparent from the ensuing description of one embodiment thereof provided by way of example. In this description reference is made to the accompanying drawings, in which:
Figure 1 is a side elevation of a connection device according to the present invention, provided with an electronic pulsator, with the movable part inserted into the fixed part previously applied to the milk main, this latter being visible in cross-section;
Figure 2 is a vertical section therethrough taken at the vacuum pipes;
Figure 3 is a vertical section therethrough taken at the conduit which feeds milk into the milk main, neither this latter nor the pulsator being shown for simplicity;
Figure 4 is a perspective view of only the movable part of the device;
Figure 5 is a vertical elevation of only the movable part, in which that side thereof not visible in Figure 3 can be seen;
Figure 6 is similar to Figure 3, but without the fixed part;
Figure 8 is a perspective view of only the first male element of the movable part;
Figure 9 is a front elevation of only the fixed part;
Figure 10 is a plan view from above of the fixed part from which the cover covering said first seat has been removed;
Figure 11 is similar to Figure 2 but enlarged, and without the movable part;
Figure 12 is a vertical section through the fixed part, taken on the line 12-12 of Figure 10;
Figure 13 shows the connection device at a stage in which the insertion of its movable part into the fixed part has just commenced.

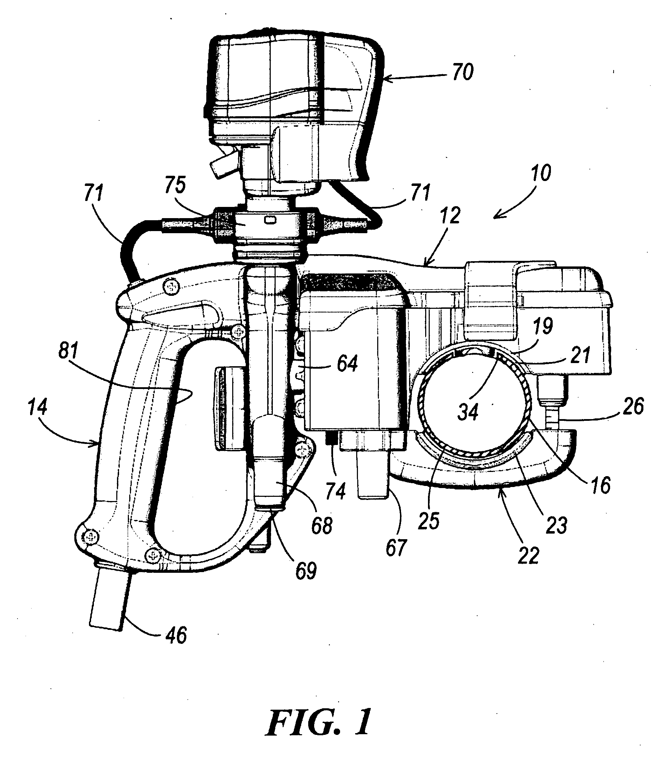

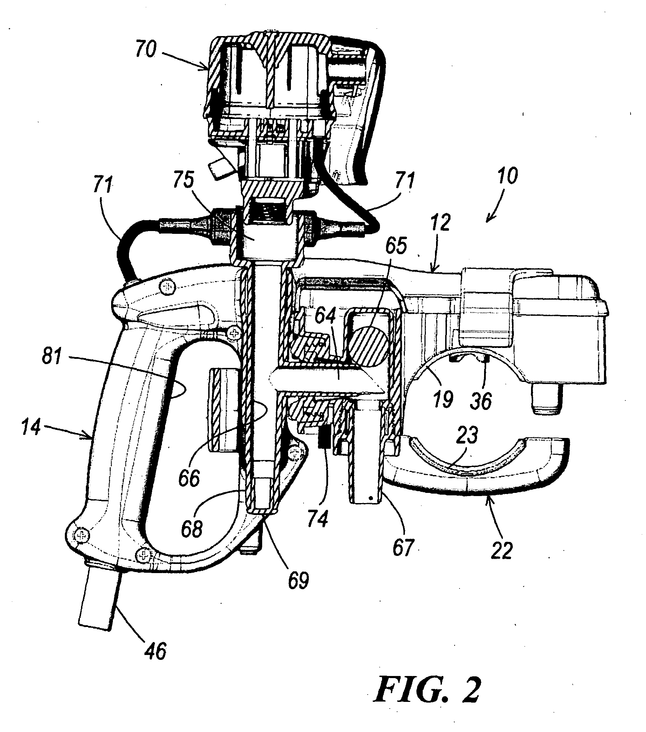

Figures 1-3 show a device 10 which enables a milking unit (not shown) of a "milk transport" system to be connected both to the milk main and to the vacuum pipe of the milking system, and also enables a possible electronic pulsator to be powered and signals to be transmitted via cable for controlling the milking operation. The electronic pulsator is shown in Figures 1 and 2, where it is indicated by 70. It must however be understood that it can also be dispensed with or be replaced by a pneumatic pulsator.

As will be apparent observing the figures, the connection device 10 comprises two parts, namely a fixed part 12, known commonly as the "tap", and a movable part 14, known commonly as the "plug-in".

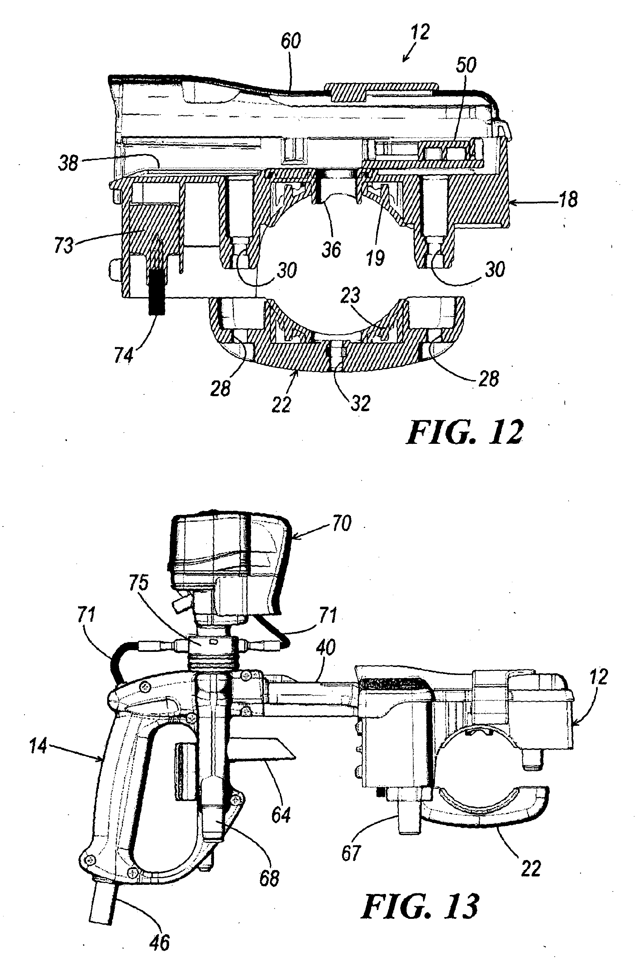

From Figure 1 it can be seen that the fixed part 12 is clamped to a milk main 16 (of which the cross-section is shown), consisting of a stainless steel pipe carried by conventional support structures. As best seen from Figure 12, the body 18 of the fixed part 12 comprises an insert 19 defining an arch 20 having a radius of curvature suitable to receive a part of the perimeter of the milk main 16 (Figure 1). The fixed part 12 also comprises an arched backing element 22, also comprising an insert 23 defining a second arch 24 of the same radius of curvature as the first arch 20 and fixable against this latter to clamp the fixed part 12 to the milk main (Figure 1) by two relative screws (one of which, indicated by 26, is partially visible in Figure 1) inserted through relative vertical holes 28 (Figure 12) and screwed down into corresponding vertical holes 30 provided in the body 18 of the fixed part 12.

From Figure 1 it can be seen that a relative gasket 21 and 25 is provided between the arch inserts 20 and 24 and the milk main 16 (Figure 1). These gaskets (for example of EPDM) are as thin as possible to prevent their deformability from enabling the fixed part 12 to rotate (even to a small extent) about the milk main 16.

From Figure 12 it can also be seen that the backing element 22 comprises a further central vertical hole 32 enabling a pointed setscrew (not shown for simplicity) to be screwed into it so that the setscrew point presses against the milk main 16. As already stated, the use of this locking setscrew prevents rotation of the fixed part 12 about the axis of the milk main 16, by the forces which act on the fixed part 12 during use.

From the aforegoing it is apparent that by replacing the arch inserts 19 and 23 with others in which the respective arches 20 and 24 have a suitable radius of curvature, it becomes possible to clamp the fixed part 12 to milk mains of any diameter.

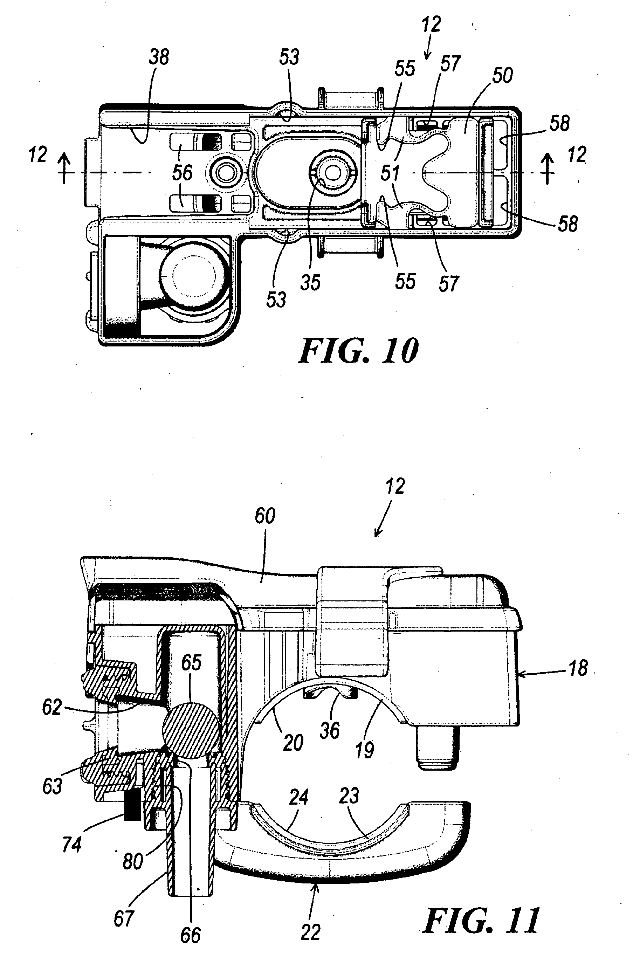

As again seen from Figure 1, the milk main 16 presents a through hole 34 on its top, into which a nipple 36 (best seen in Figures 11 and 12) is inserted, the function of which (although evident to an expert of the art) is clarified hereinafter. Here it should be noted that inserting said locking setscrew into the hole 32 prevents any tugging or impacts acting on the fixed part 12 from rotating this latter and cause breakage of the nipple 36.

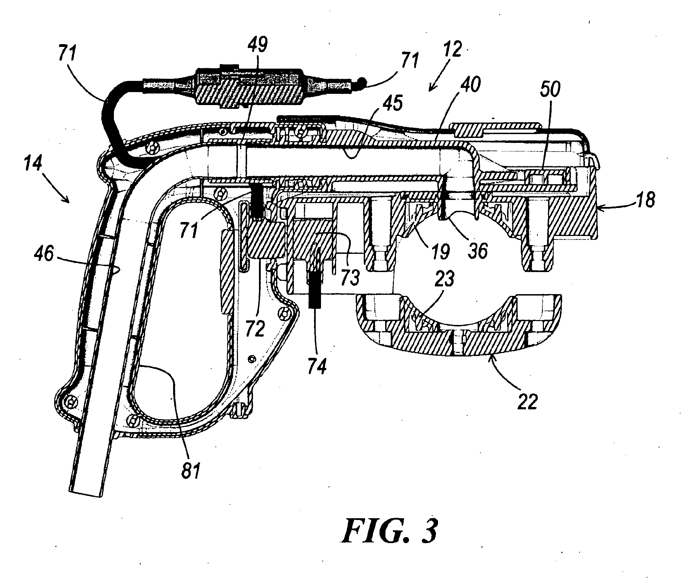

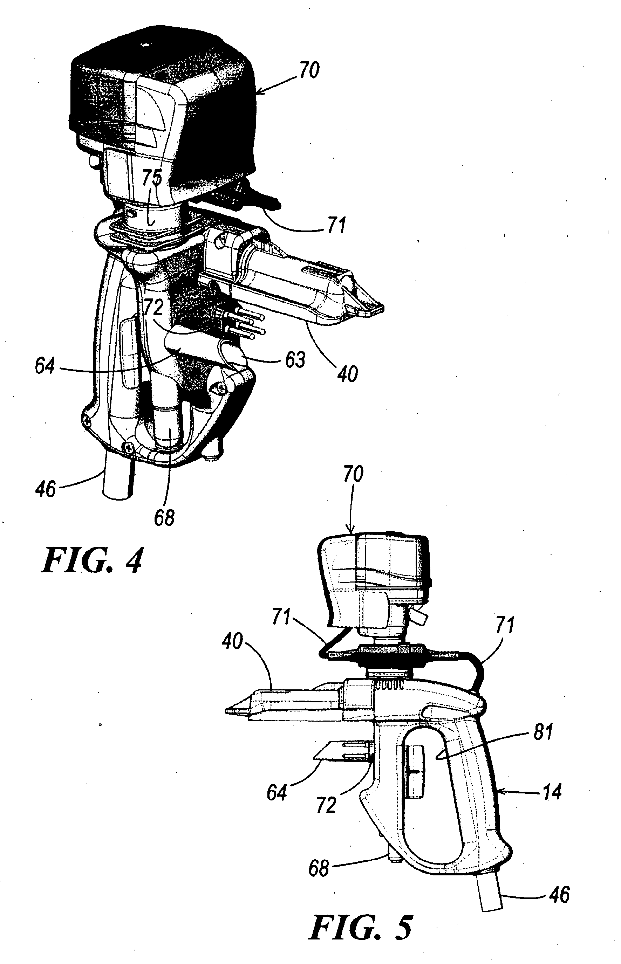

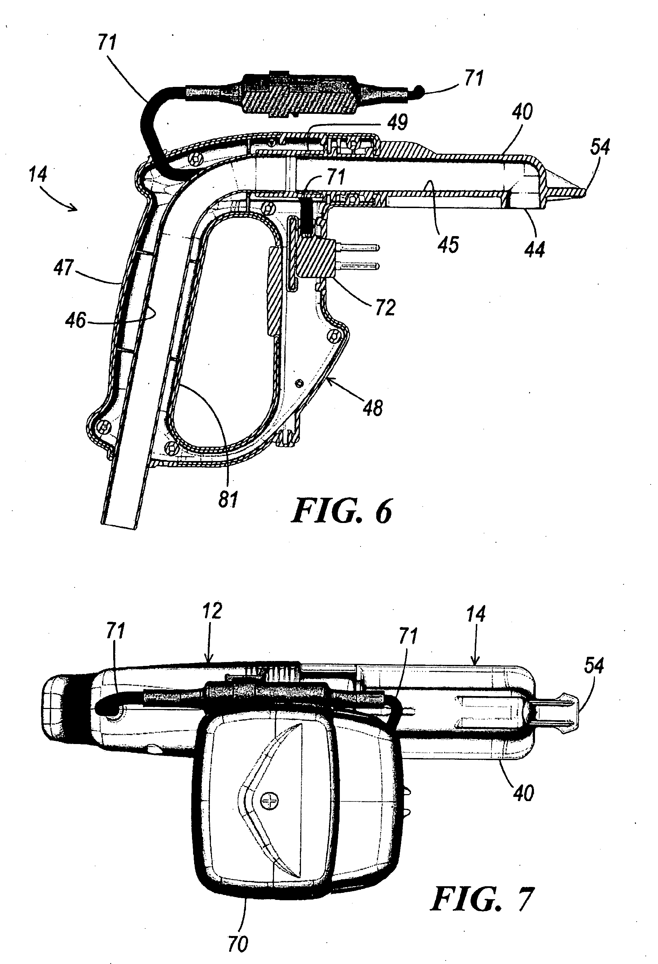

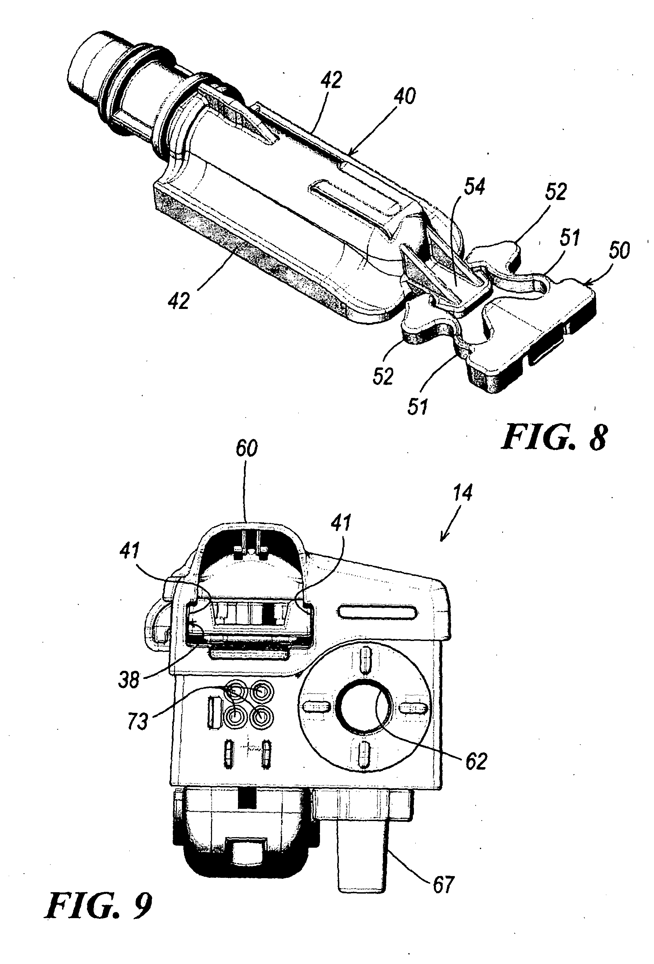

From Figures 9, 10 and 12 it can be seen that the body 18 of the fixed part 12 presents a frontally and upperly open first seat 38 which communicates with the nipple 36 (Figure 12) via a first aperture 35. The first seat 38 is shaped to slidably receive a first male element 40 (best seen in Figures 4-9) which extends from the body 48 of the movable part 14. The first male element 40 is in the form of a slide and is provided with lateral ribs 42 intended to cooperate with corresponding horizontal opposing lateral grooves 41 (Figure 9) provided in the first seat 38. Figure 13 shows how the movable part 14 is inserted into the fixed part 12, with the first male element 40 commencing its engagement in the first seat 38. When insertion is complete, the situation is as shown in Figures 1-3. In proximity to the free end of the first male element 40 there is provided a second aperture 44 which in this situation lies (Figure 3) exactly above the aperture 35 and hence above the nipple 36 for milk feed into the milk main 16, As can be seen from Figures 3 and 6, the second aperture 44 represents the mouth of a milk conduit, that portion 45 of which, forming part of the first male element 40 (Figure 6), is of suitable plastic material (for example food quality nylon or Moplen (registered trademark), while its remaining portion 46 is of stainless steel. It can also be seen that most of the portion 46 is contained within an ergonomic handgrip 47 forming part of the body 48 of the movable part 14. The far end of the stainless steel pipe piece 46 projects from the handgrip 47 and is connected to the end of a conventional flexible pipe (not shown) the other end of which is connected to the manifold of the milking unit. Consequently during milking, the milked milk passes through the milk conduit 46, 48 and though said second aperture 44 (Figure 6) and the nipple 36 (Figure 11) to reach the milk main 16 (Figure 1).

It should be noted that a junction sleeve 49 (Figure 6) of suitable elastic plastic material (for example EPDM) is provided between the bent stainless steel pipe piece 46 and the conduit portion 45 of fairly rigid plastic. The elasticity of the sleeve is such that when tugging or impacts act on the stainless steel pipe portion 46, these do not cause breakages or discontinuities between the two different material conduit portions 46 and 45.

In addition to the first male element 40, a slide element 50 can slide within the first seat 38 in both directions. In Figure 10, it is shown for simplicity released from the first male element 40. In reality, when the movable part 14 is not inserted into the fixed part 12, the slide element 50 lies above the first aperture 35 (this latter visible in Figure 10), with its two symmetrical elastic arms 51 in their widened position and their lateral projections 52 (best seen in Figure 8) received in relative recesses 53 provided in the respective sides of the first seat 38, so that the slide element 50 is released from the first male element 40, but retained in position so as to upperly close the nipple 36, because of which there is no communication with the milk main 16. When the first male element 40 commences its insertion into the first seat 38, the slide element 50 lies in the latterly described position. As insertion proceeds, the front end of the first male element 40 at a certain point pushes the slide element 50 forwards, to force the projections 52 to leave the recesses 53. Consequently, the elastic arms 51 approach each other, their inner projections 55 remaining engaged with the rostrum 54, even when the first male element 40 is withdrawn, at least until the outer projections 52 of the arms 51 are able to re-enter the recesses 53, to hence cause release of the slide element 50 from the rostrum 54.

It is important to note that the base of the first seat 38 presents a series of discharge holes 56-58 (Figure 10), the purpose of which is to prevent accumulation of dust therein, which inevitably deposits in it. If these discharge ports were absent, the increasing dust accumulation could finally prevent complete insertion of the first male element 40 into the first seat 38, so compelling periodical cleaning to prevent vacuum losses and possible intake of dirt into the milk main. A protection cover 60 is provided for the first seat 38 (see Figures 9, 11 and 12 in particular). The cover 60 is removable without the aid of tools, so allowing easy access to the first seat 38 for periodical inspection.

As can be seen from Figure 11, in the body 18 of the fixed part 12 a second seat 62, frusto-conical in this case, is provided into which a second hollow male element 64 of circular cross-section and forming part of the movable part 12 is sealedly insertable by virtue of a lip gasket 63. A second seat 64 communicates with a non-return valve the valving element of which consists of a stainless steel ball 65 closing an aperture 66 which communicates with a removable nipple 67 screwed into a relative threaded cylindrical housing 80 provided in the body 18 of the fixed part 12. As will be apparent, the removal of the nipple 67 allows direct inspection of the second seat 62 and the valve 65. One end of a conventional flexible hole is mounted on the free end of the nipple 67 to conventionally connect it to the vacuum pipe of the milking system, this pipe normally extending parallel and adjacent to the milk main.

As can be seen from Figure 2, the second male element 64 has an open free end 63 of flute mouthpiece shape. By virtue of this shape, when the movable part 14 is inserted into the fixed part 12, the particular shape of the end of the second male element 64 enables the ball 65 to rise and open the relative valve, to connect the interior of the second male element 64 to the system vacuum pipe. From Figure 2 it can be seen that the interior of the second male element 64 communicates with a vertical conduit 66 contained in the body 48 of the movable part 12. At the upper end of the conduit 66 there is provided a bayonet connection 75 (already used by the applicants of this application for all their pulsators for other applications) which enables either a pneumatic pulsator or an electronic pulsator (such as that shown in the present case in Figures 1, 2, 4, 5, 7 and 13 and indicated by 70) to be fixed to the body 48. If pulsators (either electronic or pneumatic) incompatible with the connection provided on the body 48 are to be used, it suffices to provide a suitable adaptor. As will be apparent observing Figure 2, the connection 75 also enables vacuum to communicate with the pulsator 70.

As the milking unit can be of a type which does not have a pulsator applied to the movable part 14, a plug with a bayonet connection is provided (not shown for simplicity, its construction being apparent), applicable in that case to the connection 75 to close the upper mouth of the conduit 66. As also shown in Figure 2, the conduit 66 terminates lowerly with a nipple 68 (also shown in Figure 1) closed by a removable plug 69. The nipple 68 forms an auxiliary outlet allowing feed to all those items of the milking unit requiring the use of vacuum (for example an automatic detachment cylinder or a pulsator if not located on the movable part 12).

Observing Figures 1, 6 and 9 it can be seen that the electric powering of the electronic pulsator 70 takes place via an electrical connection 71 divided into two parts connectable by means of conventional pins. The other end of the electrical connection 71 is connected to an electric plug-shaped insert 72 (Figure 3), contained in a relative housing provided in the body 48 of the movable part 14. The plug insert 72 is plugged into a corresponding electric socket insert 73 (visible in Figure 3) contained in a relative housing provided in the body 18 of the fixed part 12. An electric cable 74 connects it to a source of electrical energy (not shown) and possibly (if a pole is provided dedicated to data transmission) to a control unit (for example a PC). Although in the present case the socket insert is provided on the fixed part 12 and the plug on the movable part 14, their positions could in principle be inverted.

As can be seen from Figure 9, in this specific case the electrical connection is of the four pole type, of which three are the positive, negative and earth respectively, while the fourth can be used to transmit information to said control unit via cable, for more exact milking control. It is however apparent that by using suitable plug/socket inserts 72, 73 the electrical connection could be three-pole (positive, negative and earth, without data transmission) or even two-pole (positive and negative).

The connection device of the invention could be provided with means for suspending the movable part 14, when not inserted into the fixed part 12, from a simple hook applicable to the milk main close to each fixed part 14, to leave both the operator's hands free when required. This means that in such cases the operator does not have to rest the movable part where it happens to be when free hands are required, with consequent hygiene problems. Said hook is not shown for simplicity, its construction being apparent to an expert of the art. Said means for suspending the movable part 14 from said hook can simply consist of the already provided aperture 81 in the fixed part 12, into which the hook can be inserted.

From the aforegoing it is apparent that the aforedescribed and illustrated connection device 10, by simply inserting the movable part 14 into the fixed part 12, simultaneously provides three easy to use facilities, i.e. connection both to the milk main and to the vacuum pipe, and electrical connection to an electrical energy source and possibly to a control unit. This connection device is usable both if an electronic pulsator or a pneumatic pulsator is to be located on the movable part 14 and if no pulsator is to be located on the movable part, while also enabling a two-pole, three-pole or even four-pole electrical connection to be made.

If an electronic pulsator is not provided, the plug insert 72 is conveniently replaced by a blank plug.

It should also be noted that the aforedescribed connection device can also be applied to milk mains of any usable diameter, because of the facility for replacing the arch elements 19, 22 by others with an arch which fits the diameter of the milk main.

## Claims

1. A device (10) for connecting a mobile milking unit of a milking system of "milk transport" type simultaneously to the milk main (16) and to the milking system vacuum pipe, comprising:
- a fixed part (12) applicable directly to the milk main (16), and comprising:
• a first seat (38) in which a first aperture (35) is provided to communicate with the milk main (16) via a nipple (36) insertable into an aperture (34) previously provided in the milk main (16), in the first seat (38) a slide element (50) being slidable between two end positions, in one of which the slide element (50) sealedly closes the first aperture (35) while in the other position this aperture (35) remains open;
• a second seat (62) communicating with the system vacuum pipe via a non-return valve (65);
• socket or plug means (73) connected electrically to an electrical energy source for powering a possible electronic pulsator (70);
- a movable part (14) connectable to the milking unit and comprising:
• a first hollow male element (40), insertable into the first seat (38) of the fixed part (12) and presenting at or in the vicinity of its free end a second aperture (44) which sealedly coincides with said first aperture (35) when the first male element (40) is completely inserted into the first seat (38), the interior of the first male element (40) communicating with the milking unit milk manifold via a milk conduit (45, 46) partly enclosed within the body (48) of the movable part (14);
• means (51, 54) enabling the first male element (40) to drag the slide element (50) from its end position in which it does not close the first aperture (35) to the position in which it closes the first aperture (35) when the first male element (40) is extracted from the first seat (38), and means (52, 53) which enable the slide element (50) to be uncoupled when, dragged by the first male element (40), it reaches the first aperture (35);
• a second hollow male element (64) sealedly insertable into said second seat (62) as a consequence of the insertion of the first male element (40) into the first seat (38), insertion of the second male element (64) causing the non-return valve (35) to open, the interior of the second male element (64) communicating with a possible pneumatic pulsator or electronic pulsator (70) mountable on the movable part (14).
• plug or socket means (72) connected electrically to the possible electronic pulsator (70) and made to engage the socket or plug means (73) of the fixed part (12) by inserting the first male element (40) into the first seat (38), to hence establish an electrical connection; wherein the movable part (14) is provided with a connector (75) which enables either a pneumatic pulsator or an electronic pulsator (70) to be applied to the same movable part (14), possibly via an adaptor, and the pulsator (70) to communicate with the second male element (64), and means are provided, which are applicable to said connector (75), to close communication with the second male element (64) if pulsators directly applied to the movable part (14) are not provided.

2. A connection device (10) as claimed in claim 1, wherein a first arch element (19) of radius of curvature substantially equal to that of the milk main (16) to be used is removably applicable to the body (18) of the fixed part (12), to embrace a part of the perimeter of the cross-section of the milk main (16), a second arch element (23) with the same radius of curvature as the first arch element (19) being removably applicable to a backing element (22) forming part of the fixed part (12) to embrace the opposing part of the perimeter of the milk main (16), the backing element (22) being connectable to the body (18) of the fixed part (12), to clamp this latter (12) to the milk main (16).

3. A connection device (10) as claimed in claim 2, wherein the backing element (22) presents at least one radial threaded through hole (32) into which a screw can be screwed, the point of which is forced against the outer surface of the milk main (16) when the screw is screwed completely down, to hence oppose rotation of the fixed part (12) about the milk main (16) axis due to the forces which may act on this latter (12).

4. A connection device (10) as claimed in claim 1, wherein the milk conduit (45, 46) partially contained within the body (48) of the movable part (14) contains a stainless steel pipe piece (46) and a rigid plastic pipe piece (45) forming the interior of the first male element (40), an elastically flexible connection sleeve (49) being interposed between the two (45, 46).

5. A connection device (10) as claimed in claim 1, wherein the non-return valve (65) communicates with the system vacuum pipe via a nipple formed as a separate piece (67), the nipple (67) presenting its near end externally threaded to be able to be screwed into a corresponding threaded cylindrical housing (80) provided in the body (18) of the fixed part (12) and communicating directly with said second seat (62), the diameter of the housing (80) being of a size which enables the second seat (62) and the non-return valve (65) to be inspected and directly cleaned.

6. A connection device (10) as claimed in claim 1, wherein an auxiliary nipple (68) is provided in the movable part (14) and communicates with the interior of the second male element (64) to feed one of those possible user items of the milking unit requiring the use of vacuum.

7. A connection device (10) as claimed in claim 1, wherein the first male element (40) is formed as a slide, with two lateral ribs (42) intended to cooperate with corresponding opposing lateral grooves (41) provided in the first seat (38).

8. A connection device (10) as claimed in claim 7, wherein the base of the first seat (38) presents discharge holes (56-58) to prevent dust accumulation in the first seat (38).

9. A connection device (10) as claimed in claim 1, wherein the socket or plug means (73) of the fixed part (12) and the plug or socket means (72) of the movable part (14) are of the four pole type, the fourth pole being dedicated to data transmission.

10. A connection device (10) as claimed in claim 1, wherein if an electronic pulsator (70) is not provided on the movable part (14), the plug means (73) of the fixed part (12) are replaced by a blank plug.

11. A connection device (10) as claimed in claim 1, wherein the connector (75) is of bayonet type.

12. A connection device (10) as claimed in claim 1, wherein means (81) are provided for suspending the movable part (14), when not inserted into the fixed part (12), from a hook applicable to the milk main (16), to leave both the operator's hands free when required.

## Patentansprüche

1. Vorrichtung (10), um eine mobile Melkeinheit eines Melksystems vom "Milch-Transport"-Typ gleichzeitig mit der Milch-Hauptleitung (16) und mit der Melksystem-Vakuumpumpe zu verbinden, mit:
- einem feststehenden Teil (12), das direkt an der Milch-Hauptleitung (16) angebracht werden kann, und aufweist:
• einen ersten Sitz (38), in dem eine erste Öffnung (35) vorgesehen ist, um mit der Milch-Hauptleitung (16) über einen Nippel (36) zu kommunizieren, der in eine Öffnung (34) eingesetzt werden kann, die zuvor in der Milch-Hauptleitung (16) vorgesehen wurde, wobei in dem ersten Sitz (38) ein Gleitelement (50) zwischen zwei Endpositionen verschiebbar ist, wobei das Gleitelement (50) in einer dieser Positionen die erste Öffnung (35) abdichtend schließt, während diese Öffnung (35) in der anderen Position offen bleibt;
• einen zweiten Sitz (62), der über ein Rückschlagventil (65) mit der Vakuumpumpe des Systems kommuniziert;
• eine Steckdose- oder Steckereinrichtung (73), die elektrisch mit einer elektrischen Energiequelle verbunden ist, um einen möglichen elektronischen Pulsator (70) zu speisen;
- einem beweglichen Teil (14), das mit der Melkeinheit verbunden werden kann und aufweist:
• ein erstes hohles männliches Element (40), das in den ersten Sitz (38) des feststehenden Teils (12) eingesetzt werden kann und an oder in der Nähe von seinem freien Ende eine zweite Öffnung (44) hat, die abdichtend mit der ersten Öffnung (35) zusammentrifft, wenn das erste männliche Element (40) vollständig in den ersten Sitz (38) eingesetzt ist, wobei das Innere des ersten männlichen Elements (40) mit dem Milch-Sammelleitung der Melkeinheit über eine Milchleitung (45, 46) kommuniziert, die teilweise in dem Körper (48) des beweglichen Teils (14) eingeschlossen ist;
• Einrichtungen (51, 54), die es ermöglichen, dass das erste männliche Element (40) das Gleitelement (50) aus seiner Endposition, in der es nicht die erste Öffnung (35) verschließt, in die Position zu ziehen, in der es die erste Öffnung (35) verschließt, wenn das erste männliche Element (40) aus dem ersten Sitz (38) herausgenommen wird, und Einrichtungen (52, 53), die ein Entkoppeln das Gleitelements (50) ermöglichen, wenn, gezogen durch das erste männliche Element (40), es die erste Öffnung (35) erreicht;
• ein zweites hohles männliches Element (64), das abdichtend in den zweiten Sitz (62) eingesetzt werden kann, wenn das erste männliche Element (40) in den ersten Sitz (38) eingesetzt wird, wobei das Einsetzen des zweiten männlichen Elements (64) ein Öffnen des Rückschlagventils (35) bewirkt, wobei das Innere des zweiten männlichen Elements (64) mit einem möglichen pneumatischen Pulsator oder einem elektronischen Pulsator (70) kommuniziert, der an dem beweglichen Teil (14) montiert werden kann;
• Stecker- oder Steckdoseneinrichtungen (72), die elektrisch mit dem möglichen elektronischen Pulsator (70) verbunden und ausgestaltet sind, um mit den Steckdosen- oder Steckereinrichtungen (73) des feststehenden Teils (12) einzugreifen, indem das erste männliche Element (40) in den ersten Sitz (38) eingesetzt wird, um dadurch eine elektrische Verbindung zu bewirken;
wobei das bewegliche Teil (14) mit einem Verbindungsmittel (75) versehen ist, durch das ermöglicht wird, dass entweder ein pneumatischer Pulsator oder ein elektronischer Pulsator (70) an dem gleichen beweglichen Teil (14) angebracht werden kann, möglicherweise über einen Adapter, und der Pulsator (70) mit dem zweiten männlichen Element (64) kommunizieren kann, und Einrichtungen vorgesehen sind, die an das Verbindungsmittel (75) angebracht werden können, um eine Kommunikation mit dem zweiten männlichen Element (64) zu schließen, wenn Pulsatoren, die direkt an das bewegliche Teil (14) angebracht werden, nicht vorgesehen sind.

2. Verbindungsvorrichtung (10) nach Anspruch 1, bei der ein erstes Bogenelement (19) mit einem Krümmungsradius, der im Wesentlichen gleich dem der verwendeten Milch-Hauptleitung (16) ist, abnehmbar an dem Körper (18) des feststehenden Teils (12) angebracht werden kann, um einen Teil des Umfangs des Querschnitts der Milch-Hauptleitung (16) zu umschließen, ein zweites Bogenelement (23) mit dem gleichen Krümmungsradius wie das erste Bogenelement (19) abnehmbar an einem Rückenelement (22) angebracht werden kann, dass einen Teil des feststehenden Teils (12) bildet, um dem gegenüberliegenden Teil des Umfangs der Milch-Hauptleitung (16) zu umschließen, wobei das Rückenelement (22) mit dem Körper (18) des feststehenden Teils (12) verbunden werden kann, um dieses Letztere (12) gegen die Milch-Hauptleitung (16) festzuspannen.

3. Verbindungsvorrichtung (10) nach Anspruch 2, bei der das Rückenelement (22) mindestens ein radiales Gewinde-Durchgangsloch (32) aufweist, in das eine Schraube geschraubt werden kann, deren Spitze gegen die äußere Fläche der Milch-Hauptleitung (16) gedrückt wird, wenn die Schraube vollständig eingeschraubt ist, um so einer Drehung des feststehenden Teils (12) um die Achse der Milch-Hauptleitung (16) aufgrund von Kräften, die auf dieses Letztere (12) wirken können, entgegenzuwirken.

4. Verbindungsvorrichtung (10) nach Anspruch 1, bei der die Milchleitung (45, 46), die zumindest teilweise in dem Körper (48) des bewegbaren Teils (14) enthalten ist, ein Edelstahl-Rohrstück (46) und ein starres Kunststoff-Rohrstück (45) enthält, durch das das Innere des ersten männlichen Elements (40) gebildet ist, wobei eine elastisch flexible Verbindungshülse (49) zwischen diesen beiden (45, 46) vorgesehen ist.

5. Verbindungsvorrichtung (10) nach Anspruch 1, bei der das Rückschlagventil (65) mit der System-Vakuumpumpe über einen Nippel kommuniziert, der als ein separates Stück (67) ausgebildet ist, wobei der Nippel (67) an seinem nahegelegenen Ende ein Außengewinde aufweist, um in ein zugehöriges zylindrisches Gewindegehäuse (80) geschraubt werden zu können, das in dem Körper (18) des feststehenden Teils (12) vorgesehen ist, und direkt mit dem zweiten Sitz (62) kommuniziert, wobei der Durchmesser des Gehäuses (80) eine Größe hat, die es ermöglicht, dass der zweite Sitz (62) und das Rückschlagventil (65) untersucht und direkt gereinigt werden können.

6. Verbindungsvorrichtung (10) nach Anspruch 1, bei der ein zusätzlicher Nippel (68) in dem beweglichen Teil (14) vorgesehen ist und mit dem Inneren des zweiten männlichen Elements (64) kommuniziert, um einem der möglichen Benutzer Gegenstände der Melkeinheit zur Verfügung zu stellen, die die Verwendung eines Vakuums erforderlich machen.

7. Verbindungsvorrichtung (10) nach Anspruch 1, bei der das erste männliche Element (40) als ein Schiebeteil ausgebildet ist, das zwei seitliche Rippen (42) hat, die dazu dienen, mit entsprechenden gegenüberliegenden Seitennuten (41) zusammenzuwirken, die in dem ersten Sitz (38) vorgesehen sind.

8. Verbindungsvorrichtung (10) nach Anspruch 7, bei der die Basis des ersten Sitzes (38) Auslasslöcher (56-58) aufweist, um das Ansammeln von Dreck in dem ersten Sitz (38) zu verhindern.

9. Verbindungsvorrichtung (10) nach Anspruch 1, bei der die Steckdosen- und Steckereinrichtungen (73) des feststehenden Teils (12) und die Stecker- oder Steckdoseneinrichtungen (72) des beweglichen Teils (14) alle vom vierpoligen Typ sind, wobei der vierte Pol zur Datenübertragung dient.

10. Verbindungsvorrichtung (10) nach Anspruch 1, bei der, wenn ein elektronischer Pulsator (70) nicht an dem beweglichen Teil (14) vorgesehen ist, die Steckereinrichtungen (73) des feststehenden Teils (12) durch einen Blindstecker ersetzt ist.

11. Verbindungsvorrichtung (10) nach Anspruch 1, bei der das Verbindungsmittel (75) vom Bajonett-Typ ist.

12. Verbindungsvorrichtung (10) nach Anspruch 1, bei der Einrichtungen (81) vorgesehen sind, um das bewegliche Teil (14) aufzuhängen, wenn es nicht in das feststehende Teil (12) eingesetzt ist, und zwar an einem Haken, der an der Milch-Hauptleitung (16) angebracht werden kann, damit der Benutzer beide Hände frei hat, wenn dies erforderlich ist.

## Revendications

1. Dispositif (10) destiné à connecter simultanément une unité de traite mobile d'une installation de traite de type « transfert de lait » au lactoduc (16) et à la canalisation à vide de l'installation de traite, comprenant :
- une partie fixe (12) qui peut être directement agencée sur le lactoduc (16) et comprenant :
• un premier logement (38) dans lequel est ménagée une première ouverture (35) communiquant avec le lactoduc (16) via un élément de raccordement (36) apte à être inséré dans une ouverture (34) préalablement ménagée dans le lactoduc (16), un élément coulissant (50) agencé dans le premier logement (38) étant apte à coulisser entre deux positions terminales, dans l'une desquelles l'élément coulissant (50) obture de manière étanche la première ouverture (35) tandis que, dans l'autre position, cette ouverture (35) reste ouverte ;
• un deuxième logement (62) communiquant avec la canalisation à vide de l'installation via un clapet anti-retour (65) ;
• une prise femelle ou mâle (73) électriquement reliée à une source d'énergie électrique pour alimenter un éventuel pulsateur électronique (70) ;
- une partie mobile (14) apte à être connectée à l'unité de traite et comprenant :
• un premier élément mâle creux (40), apte à être inséré dans le premier logement (38) de la partie fixe (12) et présentant au niveau de ou à proximité de son extrémité libre une deuxième ouverture (44) qui coïncide de manière étanche avec ladite première ouverture (35) lorsque le premier élément mâle (40) est complètement inséré dans le premier logement (38), l'intérieur du premier élément mâle (40) communiquant avec le collecteur de lait de l'unité de traite via un conduit de lait (45, 46) partiellement intégré dans le corps (48) de la partie mobile (14) ;
• des moyens (51, 54) permettant au premier élément mâle (40) d'entraîner l'élément coulissant (50) depuis sa position terminale dans laquelle il n'obture pas la première ouverture (35) jusqu'à la position dans laquelle il obture la première ouverture (35) lorsque l'on retire le premier élément mâle (40) du premier logement (38), et des moyens (52, 53) qui permettent de libérer l'élément coulissant (50) lorsque, entraîné par le premier élément mâle (40), il atteint la première ouverture (35) ;
• un deuxième élément mâle creux (64) apte à être inséré de manière étanche dans ledit deuxième logement (62) en conséquence de l'insertion du premier élément mâle (40) dans le premier logement (38), l'insertion du deuxième élément mâle (64) entraînant l'ouverture du clapet anti-retour (35), l'intérieur du deuxième élément mâle (64) communiquant avec un éventuel pulsateur pneumatique ou pulsateur électronique (70) apte à être monté sur la partie mobile (14) ;
• une prise mâle ou femelle (72) reliée électriquement à l'éventuel pulsateur électronique (70) et conçue pour coopérer avec la prise femelle ou mâle (73) de la partie fixe (12) par l'insertion du premier élément mâle (40) dans le premier logement (38), afin d'établir ainsi une connexion électrique ;
dans lequel la partie mobile (14) est dotée d'un raccord (75) qui permet à un pulsateur soit pneumatique soit électronique (70) d'être agencé sur ladite partie mobile (14), éventuellement par le biais d'un adaptateur, et au pulsateur (70) de communiquer avec le deuxième élément mâle (64), et dans lequel sont prévus des moyens qui peuvent être agencés sur ledit raccord (75), afin de fermer la communication avec le deuxième élément mâle (64) en cas d'absence de pulsateurs directement agencés sur la partie mobile (14).

2. Dispositif de connexion (10) selon la revendication 1, dans lequel un premier élément en arc de cercle (19) de rayon de courbure sensiblement égal à celui du lactoduc (16) destiné à être utilisé est apte à être agencé de manière amovible sur le corps (18) de la partie fixe (12), de manière à enserrer une partie du périmètre de la section transversale du lactoduc (16), un deuxième élément en arc de cercle (23) de même rayon de courbure que le premier élément en arc de cercle (19) étant apte à être agencé de manière amovible sur un élément d'attache (22) faisant partie de la partie fixe (12), de manière à enserrer la partie opposée du périmètre du lactoduc (16), l'élément d'attache (22) pouvant être raccordé au corps (18) de la partie fixe (12) afin de fixer cette dernière (12) sur le lactoduc (16).

3. Dispositif de connexion (10) selon la revendication 2, dans lequel l'élément d'attache (22) présente au moins un trou traversant radial taraudé (32) dans lequel une vis peut être vissée, dont la pointe est pressée contre la surface extérieure du lactoduc (16) lorsque la vis est entièrement vissée, pour s'opposer ainsi à la rotation de la partie fixe (12) autour de l'axe du lactoduc (16) due aux forces susceptibles de s'exercer sur celle-ci (12).

4. Dispositif de connexion (10) selon la revendication 1, dans lequel le conduit de lait (45, 46) partiellement contenu dans le corps (48) de la partie mobile (14) comprend une portion de tube en acier inoxydable (46) et une portion de tube en plastique rigide (45) formant l'intérieur du premier élément mâle (40), un manchon de connexion (49) élastiquement flexible étant placé entre les deux (45, 46).

5. Dispositif de connexion (10) selon la revendication 1, dans lequel le clapet anti-retour (65) communique avec la canalisation à vide de l'installation via un élément de raccordement se présentant sous la forme d'une pièce séparée (67), l'extrémité proximale de l'élément de raccordement (67) étant filetée extérieurement pour qu'il puisse être vissé dans un logement cylindrique taraudé (80) correspondant prévu dans le corps (18) de la partie fixe (12) et communiquant directement avec ledit deuxième logement (62), le diamètre du logement (80) étant suffisant pour permettre l'inspection et le nettoyage direct du deuxième logement (62) et du clapet anti-retour (65).

6. Dispositif de connexion (10) selon la revendication 1, dans lequel un élément de raccordement auxiliaire (68) est prévu dans la partie mobile (14) et communique avec l'intérieur du deuxième élément mâle (64) afin d'alimenter l'un des éventuels dispositifs de l'unité de traite nécessitant l'utilisation du vide.

7. Dispositif de connexion (10) selon la revendication 1, dans lequel le premier élément mâle (40) se présente sous la forme d'un coulisseau, avec deux nervures latérales (42) destinées à coopérer avec les rainures latérales opposées (41) correspondantes ménagées dans le premier logement (38).

8. Dispositif de connexion (10) selon la revendication 7, dans lequel la base du premier logement (38) présente des orifices d'évacuation (56-58) destinés à éviter l'accumulation de poussière dans le premier logement (38).

9. Dispositif de connexion (10) selon la revendication 1, dans lequel la prise femelle ou mâle (73) de la partie fixe (12) et la prise mâle ou femelle (72) de la partie mobile (14) sont du type tétrapolaire, le quatrième pôle étant dédié à la transmission de données.

10. Dispositif de connexion (10) selon la revendication 1, dans lequel, si aucun pulsateur électronique (70) n'est prévu sur la partie mobile (14), la prise mâle (73) de la partie fixe (12) est remplacée par un obturateur.

11. Dispositif de connexion (10) selon la revendication 1, dans lequel le raccord (75) est de type à baïonnette.

12. Dispositif de connexion (10) selon la revendication 1, dans lequel des moyens (81) sont prévus pour suspendre la partie mobile (14), lorsqu'elle n'est pas insérée dans la partie fixe (12), à un crochet pouvant être agencé sur le lactoduc (16), afin que l'opérateur puisse avoir les deux mains libres en cas de besoin.
